# EUROPEAN PATENT APPLICATION

(11) **EP 4 704 198 A1**
(43) Date of publication of application: **04.03.2026**
(21) Application number: 24796754.0
(22) Date of filing: 05.04.2024
(51) Int. Cl.: H01M 10/04, H01M 4/64, H01M 10/0587

(54) **SECONDARY BATTERY**

(30) Priority: 25.04.2023 JP 2023071456
(71) Applicant: Panasonic Intellectual Property Management Co., Ltd., Kadoma-shi, Osaka 571-0057 (JP)
(72) Inventor: MIZAWA, Atsushi, Osaka 571-0057 (JP); MIZUKOSHI, Fumikazu, Osaka 571-0057 (JP); NISHINAKA, Yuki, Osaka 571-0057 (JP)
(74) Representative: Eisenführ Speiser
(86) International application number: PCT/JP2024/014107
(87) International publication number: WO 2024/224996

(57) **Abstract**

Provided is a secondary battery capable of suppressing electrode plate deformation and electrode plate elongation caused by charging and discharging. This secondary battery has an electrode body in which a negative electrode and a positive electrode, which has a belt-like positive electrode core body (30) and a positive electrode mixture layer provided on the positive electrode core body (30), are wound with a separator therebetween. The secondary battery is characterized in that: the positive electrode core body (30) has a first region (32) which is a winding start end part and a second region (34) which is a region other than the first region (32); the 0.2% yield strength of the positive electrode core body in the first region (32) is 50 N/mm² or less; and the 0.2% yield strength of the positive electrode core body in the second region (34) is greater than 50 N/mm².

## Description

### TECHNICAL FIELD

The present disclosure relates to a secondary battery.

### BACKGROUND

The secondary battery such as the lithium-ion secondary battery has been used as a power supply for a wide range of devices including electric vehicles, and a further increase in capacity has been required. The secondary battery has, for example, a configuration in which a winding-type electrode assembly obtained by winding a positive electrode and a negative electrode with a separator interposed therebetween is sealed in an exterior can or the like together with an electrolytic solution or the like (e.g., Patent Literature 1).

### CITATION LIST

### PATENT LITERATURE

Patent Literature 1: WO 2020/045375 A

### SUMMARY

Incidentally, in a secondary battery including a winding-type electrode assembly obtained by winding a positive electrode and a negative electrode with a separator interposed therebetween, when the electrode assembly expands by charge-discharge, local stress is applied at a center (winding core) of the electrode assembly, so that electrode plate deformation may occur at an end of the electrode on a winding-start side end. Occurrence of electrode plate deformation may lead to deterioration of battery performance. The electrode plate deformation is improved by using a soft positive electrode core, but in this case, electrode plate elongation in which a positive electrode core elongates in a width direction (winding axis direction of the electrode assembly) may occur. If the electrode plate elongation becomes significant due to charge-discharge, the distance from one end of the positive electrode to one end of the negative electrode in the winding axis direction of the electrode assembly decreases, so that a short-circuit risk increases.

Accordingly, an object of the present disclosure is to provide a secondary battery capable of suppressing electrode plate deformation and electrode plate elongation associated with charge-discharge.

The present disclosure is a secondary battery including an electrode assembly in which a positive electrode including a strip-shaped positive electrode core and a positive electrode mixture layer provided on the positive electrode core, and a negative electrode are wound with a separator interposed therebetween, in which the positive electrode core has a first region at a winding-start end and a second region which is a region other than the first region, a 0.2% proof stress of the positive electrode core in the first region is less than or equal to 50 N/mm², and a 0.2% proof stress of the positive electrode core in the second region is more than 50 N/mm².

According to the present disclosure, a secondary battery capable of suppressing electrode plate deformation and electrode plate elongation associated with charge-discharge can be provided.

### BRIEF DESCRIPTION OF DRAWINGS

FIG. 1 is a schematic cross-sectional view of a secondary battery as an example of an embodiment.
FIG. 2 is a schematic plan view illustrating an example of a positive electrode core.

### DESCRIPTION OF EMBODIMENTS

Hereinafter, an example of an embodiment of a secondary battery according to the present disclosure will be described in detail.

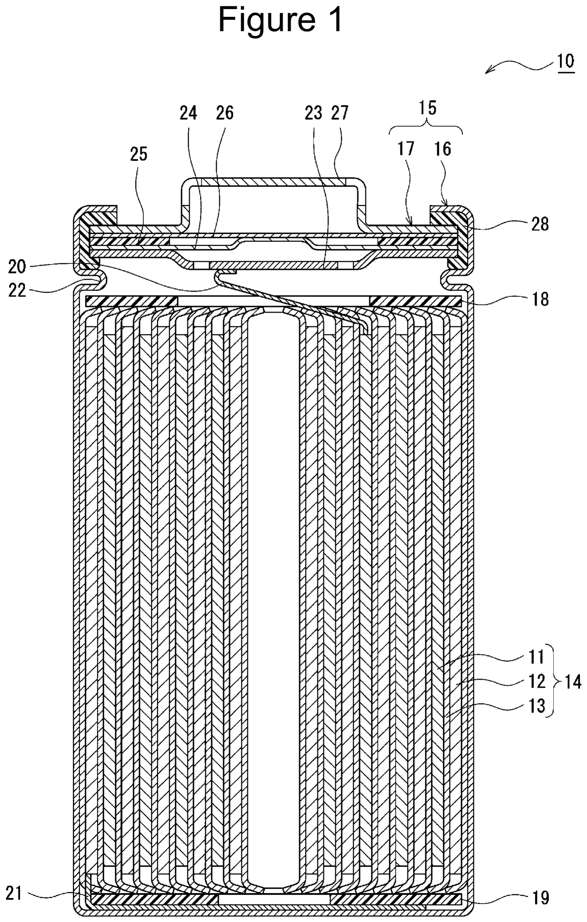

FIG. 1 is a schematic cross-sectional view of a secondary battery as an example of an embodiment. A secondary battery 10 shown in FIG. 1 includes a wound-type electrode assembly 14 formed by winding a positive electrode 11 and a negative electrode 12 with a separator 13 interposed therebetween, a non-aqueous electrolyte, insulating plates 18 and 19 disposed on and under the electrode assembly 14, respectively, and a battery case 15 which is an exterior housing assembly. The battery case 15 includes a case body 16 that houses the electrode assembly 14, the non-aqueous electrolyte, and the like, and a sealing assembly 17 that closes an opening of the case body 16. The battery case 15 is not limited to a cylindrical or rectangular metal case, and may be, for example, a resin case (a so-called laminate-type case) formed by laminating a resin sheet.

The non-aqueous electrolyte is, for example, an electrolyte having lithium ion conductivity, and may be a liquid electrolyte (electrolytic solution) or a solid electrolyte.

The liquid electrolyte (electrolytic solution) contains, for example, a non-aqueous solvent and an electrolyte salt dissolved in the non-aqueous solvent. Examples of the non-aqueous solvent include esters, ethers, nitriles, amides, and mixed solvents of two or more thereof. Examples of the non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product in which at least a part of hydrogen in these solvents is substituted with a halogen atom such as fluorine (for example, fluoroethylene carbonate or the like). As the electrolyte salt, for example, a lithium salt such as LiPF₆ is used.

As the solid electrolyte, for example, a solid or gel polymer electrolyte, an inorganic solid electrolyte, or the like can be used. As the inorganic solid electrolyte, a material known for all-solid-state lithium ion secondary batteries and the like (for example, an oxide-based solid electrolyte, a sulfide-based solid electrolyte, a halogen-based solid electrolyte, or the like) can be used. The polymer electrolyte contains, for example, a lithium salt and a matrix polymer or contains, for example, a non-aqueous solvent, a lithium salt, and a matrix polymer. As the matrix polymer, for example, a polymer material that absorbs a non-aqueous solvent and gelates is used. Examples of the polymer material include a fluororesin, an acrylic resin, and a polyether resin. The non-aqueous electrolyte is an example, and may be an aqueous electrolyte as long as it is applicable.

The case body 16 is, for example, a bottomed cylindrical metal container. A gasket 28 is provided between the case body 16 and the sealing assembly 17 to ensure airtightness within the battery. The case body 16 has a projecting portion 22 in which, for example, a part of a side surface portion of the case body 16 projects inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member constituting the sealing assembly 17 has, for example, a disk shape or a ring shape, and the members excluding the insulating member 25 are electrically connected to each other. The lower vent member 24 and the upper vent member 26 are connected to each other at their central portions, and the insulating member 25 is interposed between the circumferential portions of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, so that a current path between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a bottom surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to a bottom inner surface of the case body 16 by welding or the like, and the case body 16 serves as a negative electrode terminal.

The positive electrode 11, the negative electrode 12, and the separator 13 will be described below in detail.

The positive electrode 11 has a belt-like positive electrode core and a positive electrode mixture layer provided on the positive electrode core. The positive electrode mixture layer may be formed on both surfaces or one surface of the positive electrode core. As the positive electrode core, a foil of a metal that is stable in a potential range of the positive electrode 11, such as aluminum, a film in which the metal is disposed on a surface layer thereof, or the like can be used. The positive electrode mixture layer includes, for example, a positive electrode active material, a binder, and a conductive agent. The positive electrode mixture layer can be produced, for example, by applying a positive electrode mixture slurry containing the positive electrode active material, the binder, the conductive agent, and the like onto the positive electrode core, drying a coating film, and then rolling the coating film.

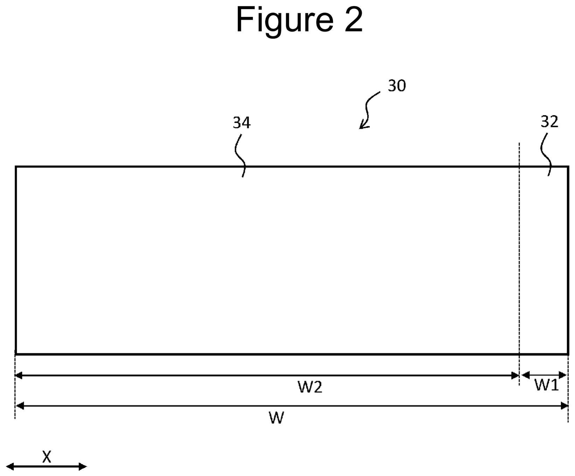

FIG. 2 is a schematic plan view illustrating an example of a positive electrode core. In FIG. 2, the positive electrode core 30 is shown in a straightened state. The longitudinal direction (direction of arrow X) of the positive electrode core 30 shown in FIG. 2 is a winding direction of the positive electrode 11. In FIG. 2, the right side in the drawing is a winding-start side of the positive electrode 11, and the left side in the drawing is a winding-end side of the positive electrode 11.

As shown in FIG. 2, the positive electrode core 30 has a first region 32 at a winding-start end which is a winding-start side of the positive electrode 11, and a second region 34 which is a region other than the first region 32. The 0.2% proof stress of the positive electrode core 30 in the first region 32 is less than or equal to 50 N/mm², and the 0.2% proof stress of the positive electrode core 30 in the second region 34 is more than 50 N/mm². By setting the 0.2% proof stress of the positive electrode core 30 in the first region 32 to less than or equal to 50 N/mm² to soften the positive electrode core 30 in the first region 32, the stress locally applied to the center of the electrode assembly 14 by charge-discharge can be dispersed, so that it is possible to suppress electrode plate deformation at the winding-start side end of the electrode. As compared to the first region 32 at a winding-start end, the second region 34 on the outer side in the winding direction is more likely to undergo electrode plate elongation in which the positive electrode core 30 elongates in the width direction due to charge-discharge. However, in the present embodiment, by setting the 0.2% proof stress of the positive electrode core 30 in the second region 34 to more than 50 N/mm² to make the positive electrode core 30 in the second region 34 harder than the positive electrode core 30 in the first region 32, electrode plate elongation associated with charge-discharge can be suppressed. The 0.2% proof stress of the positive electrode core 30 in the second region 34 is preferably greater than or equal to 100 N/mm² from the viewpoint of, for example, further suppressing electrode plate elongation caused by charge-discharge.

A method for measuring the 0.2% proof stress will be described. A positive electrode core (test piece) of, for example, 12.5 mm × 63 mm is cut out from each of the first region 32 and the second region 34. A tensile test is conducted on the test piece from the first region 32 and the test piece from the second region 34 side, and the 0.2% proof stress is determined from a stress-strain curve (hereinafter, a SS curve) obtained by the tensile test. Specifically, when a point of 0.2% strain on the SS curve is defined as a reference, and a straight line parallel to the slope of the rise of the SS curve is drawn from the reference point, the intersection of the straight line and the SS curve is a value of the 0.2% proof stress. The value of the 0.2% proof stress is an average value of test results for 10 test pieces. The SS curve is measured according to JIS C5016-1994.

The positive electrode core 30 is produced by, for example, preparing a core of more than 50 N/mm², preferably greater than or equal to 100 N/mm², and heating the first region 32 of the core to set the 0.2% proof stress of the first region 32 to less than or equal to 50 N/mm². The heating treatment method is not particularly limited, but is preferably a method in which a heating roller is brought into contact with the first region 32, from the viewpoint of, for example, easily heating only the first region 32. Examples of the other heating treatment include infrared heating. The heating treatment temperature is preferably, for example, greater than or equal to 180°C and less than or equal to 250°C. The thickness of the positive electrode core 30 is preferably, for example, greater than or equal to 10 µm and less than or equal to 50 µm from the viewpoint of being able to maintain a high 0.2% proof stress of the second region. It is to be noted that the 0.2% proof stress is influenced by the thickness of the positive electrode core 30, and therefore even if the heating treatment is not performed, the positive electrode core 30 in which the 0.2% proof stress of the first region 32 and the second region 34 satisfies the above is obtained by reducing the thickness of the first region 32 and increasing the thickness of the second region.

From the viewpoint of suppressing electrode plate deformation and electrode plate elongation caused by charge-discharge, the length W1 of the first region 32 in the winding direction of the positive electrode 11 (direction of arrow X) is preferably less than or equal to 1/10 of the total length W of the positive electrode core 30 in the winding direction of the positive electrode 11, and the length W2 of the second region 34 in the winding direction of the positive electrode 11 is preferably greater than or equal to 9/10 of the total length W of the positive electrode core 30 in the winding direction of the positive electrode 11.

Examples of the positive electrode active material contained in the positive electrode mixture layer include lithium transition metal oxides containing transition metal elements such as Co, Mn, and Ni. Examples of the lithium transition metal oxides include LiₓCoO₂, LiₓNiO₂, LiₓMnO₃, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). These may be used singly or in combination of two or more thereof. The thickness of the positive electrode mixture layer is preferably, for example, in a range of greater than or equal to 10 µm and less than or equal to 100 µm.

Examples of the binder contained in the positive electrode mixture layer include fluorine-based resins such as polytetrafluoroethylene (PTFE) and polyvinylidene fluoride (PVDF), polyacrylonitrile (PAN), polyimide-based resins, acrylic resins, polyolefin-based resins, styrene-butadiene rubber (SBR), carboxymethyl cellulose (CMC) or a salt thereof, polyacrylic acid (PAA) or a salt thereof, polyvinyl alcohol (PVA), and polyethylene oxide (PEO).

Examples of the conductive agent contained in the positive electrode mixture layer include carbon materials such as carbon black (CB), acetylene black (AB), Ketjenblack, carbon nanotube (CNT), graphene, and graphite.

The negative electrode 12 includes, for example, a strip-shaped electrode core and a negative electrode mixture layer disposed on the negative electrode core. The negative electrode mixture layer may be formed on both surfaces or one surface of the negative electrode core. As the negative electrode core, a foil of a metal that is copper or the like and is stable in a potential range of the negative electrode 12, a film in which the metal is disposed on a surface layer thereof, or the like can be used. The thickness of the negative electrode core is, for example, in a range of greater than or equal to 5 µm and less than or equal to 50 µm. The negative electrode mixture layer includes, for example, a negative electrode active material and a binding material. The thickness of the negative electrode mixture layer 50 is, for example, in a range of greater than or equal to 10 µm and less than or equal to 100 µm. The negative electrode 12 can be produced by, for example, applying a negative paste containing a negative electrode active material and a binder to the surface of the negative electrode core, drying the coating film, and then rolling the coating film.

Examples of the negative electrode active material include materials that can reversibly store and release lithium ions, such as carbon materials such as natural graphite and artificial graphite, metals such as Si and Sn, alloys, and oxides. Examples of the binder include those similar to those for the positive electrode 11. The negative electrode mixture layer may contain a conductive agent. Examples of the conductive agent include those similar to those for the positive electrode 11.

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, and a separator obtained by applying a material such as an aramid-based resin or ceramic to the surface of the separator 13 may be used.

### EXAMPLES

The present disclosure will be further explained below with reference to Examples. However, the present disclosure is not limited to these Examples.

### <Example>

### [Preparation of Positive Electrode]

A positive electrode mixture slurry was prepared by mixing 100 parts by mass of LiNi_{0.88}Co_{0.09}Al_{0.03}O₂, 1 part by mass of acetylene black (AB), and 0.9 parts by mass of polyvinylidene fluoride (PVDF), and adding an appropriate amount of N-methyl-2-pyrrolidone (NMP). Next, the positive electrode mixture slurry was applied to both surfaces of an aluminum foil being a positive electrode core, and the coating film was dried. Then, the coating film was rolled using a roller and then cut into a predetermined electrode size to produce a positive electrode having a positive electrode mixture layer formed on both surfaces of a positive electrode core.

The specifications of the aluminum foil used are as follows.
Total length W of aluminum foil; 861 mm (width: 63 mm, thickness: 15 µm)
Ratio of length W1 of first region and length W2 of second region; 1 : 9
0.2% proof stress of first region; 41 N/mm²
0.2% proof stress of second region; 152 N/mm²

### [Preparation of Negative Electrode]

A negative electrode mixture slurry was prepared by mixing 100 parts by mass of graphite powder, 1 part by mass of sodium carboxymethylcellulose (CMC-Na), and 1 part by mass of a dispersion of styrene-butadiene rubber (SBR), and adding an appropriate amount of water thereto. Next, the negative electrode mixture slurry was applied to both surfaces of a copper foil having a thickness of 8 µm, and a coating film was dried. The coating film was rolled with a roller to produce a negative electrode.

### [Preparation of Non-Aqueous Electrolyte]

A non-aqueous electrolyte was prepared by adding 5 parts by mass of vinylene carbonate (VC) to 100 parts by mass of a mixed solvent obtained by mixing ethylene carbonate (EC) and dimethyl carbonate (DMC) at a volume ratio of 3:7, and dissolving lithium hexafluorophosphate (LiPF₆) therein at a concentration of 1.5 mol/liter.

### [Production of Secondary Battery]

A positive electrode lead was attached to the positive electrode, and a negative electrode lead was attached to the negative electrode. A winding-type electrode assembly was produced by winding the positive electrode and the negative electrode with the separator interposed therebetween. Insulating plates were respectively arranged above and below the electrode assembly, and the electrode assembly was housed in a case body. The negative electrode lead was welded to a bottom of the case body, and the positive electrode lead was welded to a sealing assembly. After the non-aqueous electrolyte was injected into the case body, the opening of the case body was sealed with the sealing assembly via a gasket to produce a secondary battery.

### <Comparative Example 1>

A secondary battery was produced in the same manner as in Example except that an aluminum foil in which the 0.2% proof stress of the first region and the second region was 41 N/mm² was used in production of a positive electrode.

### <Comparative Example 2>

A secondary battery was produced in the same manner as in Example except that an aluminum foil in which the 0.2% proof stress of the first region and the second region was 152 N/mm² was used in production of a positive electrode.

### [Charge-Discharge Test]

The secondary batteries of Example and Comparative Examples were charged at a constant current of 0.3 C under a temperature environment of 25°C, and charged at a constant voltage until the charge current reached a current value less than or equal to 0.01 mA when the battery voltage reached 4.2 V. Subsequently, 0.5C constant-current discharge was performed until the battery voltage reached 2.5 V. The charging and discharging were performed for 500 cycles.

The center of the electrode assembly of the secondary battery of each of Example and Comparative Examples after the charge-discharge test was observed using an X-ray CT apparatus (SMX-225CT FPD HR manufactured by Shimadzu Corporation), and whether or not electrode plate deformation occurred was evaluated. Table 1 shows the results. For the evaluation of electrode plate deformation, it was determined that electrode plate deformation did not occur and "A" was assigned when the electrode at the center of the electrode assembly was not bent, and it was determined that electrode plate deformation occurred and "B" was assigned when the electrode at the center of the electrode assembly was bent. In addition, the winding axis-direction end of the electrode assembly of the secondary battery of each of Example and Comparative Examples was observed using an X-ray CT apparatus (SMX-225CT FPD HR manufactured by Shimadzu Corporation), and electrode plate elongation was evaluated. Table 1 shows the results. For the evaluation of electrode plate elongation, the distance from one end of the positive electrode to one end of the adjacent negative electrode in the winding axis direction of the electrode assembly before the charge-discharge test was defined as a reference (1.0), it was determined that electrode plate elongation was suppressed and "A" was assigned when the distance in the electrode assembly after the charge-discharge test was greater than or equal to 0.5, and it was determined that electrode plate elongation occurred and "B" was assigned when the distance in the electrode assembly after the charge-discharge test was less than 0.5.

**[Table 1]**

| | 0.2% Proof stress of positive electrode core (N/mm²) | | Evaluation | |
|---|---|---|---|---|
| | First region | Second region | Electrode plate deformation | Electrode plate elongation |
| Example | 41 | 152 | A | A |
| Comparative Example 1 | 41 | 41 | A | B |
| Comparative Example 2 | 152 | 152 | B | A |

In Example, electrode plate deformation and electrode plate elongation associated with charge-discharge were suppressed. On the other hand, in Comparative Example 1, electrode plate elongation associated with charge-discharge occurred, and in Comparative Example 2, electrode plate deformation associated with charge-discharge occurred.
These results demonstrate that electrode plate deformation and electrode plate elongation associated with charge-discharge can be suppressed by using a positive electrode core in which the 0.2% proof stress of the positive electrode core in the first region at the winding-start end is less than or equal to 50 N/mm² and the 0.2% proof stress of the positive electrode core in the second region which is a region other than the first region is more than 50 N/mm².

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Positive electrode core
- 32: First region
- 34: Second region

## Claims

1. A secondary battery comprising an electrode assembly in which a positive electrode including a strip-shaped positive electrode core and a positive electrode mixture layer provided on the positive electrode core, and a negative electrode are wound with a separator interposed therebetween,
wherein the positive electrode core has a first region at a winding-start end and a second region which is a region other than the first region,
a 0.2% proof stress of the positive electrode core in the first region is less than or equal to 50 N/mm², and
a 0.2% proof stress of the positive electrode core in the second region is more than 50 N/mm².

2. The secondary battery according to claim 1, wherein the 0.2% proof stress of the positive electrode core in the second region is greater than or equal to 100 N/mm².

3. The secondary battery according to claim 1 or 2, wherein a length of the first region in a winding direction of the positive electrode is less than or equal to 1/10 of a total length of the positive electrode core in the winding direction of the positive electrode, and
a length of the second region in the winding direction of the positive electrode is greater than or equal to 9/10 of the total length of the positive electrode core in the winding direction of the positive electrode.
